Europäisches Patentamt

European Patent Office

Office européen des brevets

(19)

(11) EP 1 553 781 A2

(12) EUROPEAN PATENT APPLICATION

(43) Date of publication:
13.07.2005 Bulletin 2005/28

(51) Int Cl.⁷: $H04N\ 7/34$, $H04N\ 7/36$

(21) Application number: 04257499.6

(22) Date of filing: 02.12.2004

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 02.12.2003 KR 2003086741

(71) Applicant: Samsung Electronics Co., Ltd.
Suwon-city, Gyeonggi-do (KR)

(72) Inventor: Lee, Shihwa
Seochu-gu, Seoul (KR)

(74) Representative: Greene, Simon Kenneth
Elkington and Fife LLP,
Prospect House,
8 Pembroke Road
Sevenoaks, Kent TN13 1XR (GB)

(54) **Method and apparatus for processing digital motion pictures by predicting motion compensation error using previous block.**

(57) Provided are a method and apparatus for processing a digital motion picture. The method includes: when the digital motion picture is coded, dividing a motion compensation error image, which is the result of removing temporal redundancy of the digital motion picture, into horizontal or vertical blocks, predicting a motion compensation error of a current block using a previous block neighboring by a unit pixel distance to the current block, and performing an orthogonal transform on a predicted error image consisting of the predicted motion compensation errors; and when the coded digital motion picture is decoded, recovering the predicted error image by performing an inverse orthogonal transform and recovering the motion compensation error image from the recovered predicted error image. Here, the current block means a block to be currently processed, and the previous block means a block previously processed.

FIG. 2

```
        ┌──────────┐
        │  START   │
        └────┬─────┘
             │
┌────────────────────────────┐
│   PREDICT MC ERROR OF      │
│ CURRENT BLOCK USING PREVIOUS│──── 10
│ BLOCK NEIBORING TO CURRENT │
│    BLOCK BY ONE PIXEL WHEN │
│ DIGITAL MOTION IMAGE IS CODED│
└────────────┬───────────────┘
             │
┌────────────────────────────┐
│ RECOVER MC ERROR IMAGE FROM│
│  RECOVERED PREDICTED ERROR │──── 12
│  IMAGE WHEN DIGITAL MOTION │
│     IMAGE IS DECODED       │
└────────────┬───────────────┘
             │
        ┌────┴─────┐
        │   END    │
        └──────────┘
```

EP 1 553 781 A2

**Description**

The present invention relates to processing of an image, and more particularly, to a digital motion picture processing method and apparatus for coding and decoding a digital motion picture.

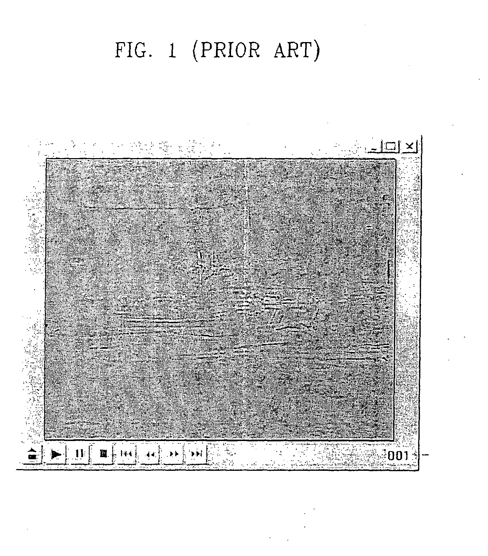

FIG. 1 is a view for explaining an example of a motion compensation (MC) error.

In general, an MC error in an MC error image, which is the result of removing temporal redundancy in a digital motion picture, is greatly distributed around the edge of an object that is moving within the MC error image. The great distribution of the MC error results because motion estimation and motion compensation are performed for each macroblock (MB) and respective MBs have one motion vector during coding of a motion picture. In other words, a relatively large MC error may occur due to motion component, among the motion components included in an MB, that is not reflected in one motion vector.

Errors at portions of an image other than the surroundings of edge thereof have values close to "0", while errors on the surroundings of the edge of the image are relatively large. Thus, performing a Discrete Cosine Transform (DCT) on the surroundings of error values on the edge may disperse data rather than concentrate data. In other words, performing a DCT on the MC error may bring about poorer results than performing a DCT on a source image.

Accordingly, a conventional method of coding and decoding a digital motion picture may deteriorate the effect of DCT.

The present invention provides a method and apparatus for processing a digital motion picture that improve coding efficiency of the digital motion picture.

According to an aspect of the present invention, there is provided a method of processing a digital motion picture, including: when the digital motion picture is coded, dividing a motion compensation error image, which is the result of removing temporal redundancy of the digital motion picture, into horizontal or vertical blocks, predicting a motion compensation error of a current block using a previous block neighboring by a unit pixel distance to the current block, and performing an orthogonal transform on a predicted error image consisting of the predicted motion compensation errors; and when the coded digital motion picture is decoded, recovering the predicted error image by performing an inverse orthogonal transform and recovering the motion compensation error image from the recovered predicted error image. Here, the current block means a block to be currently processed, and the previous block means a block previously processed.

According to another aspect of the present invention, there is provided an apparatus for processing a digital motion picture, including: a coder which divides a motion compensation error image, which is a result of removing temporal redundancy of the digital motion picture, into horizontal or vertical blocks, predicts a motion compensation error of a current block using a previous block neighboring by a unit pixel distance to the current block, and performs an orthogonal transform on a predicted error image consisting of the predicted motion compensation errors; and a decoder which recovers the predicted error image by performing an inverse orthogonal transform and recovers the motion compensation error image from the recovered predicted error image.

The above and other features and advantages of the present invention will become more apparent by describing in detail exemplary embodiments thereof with reference to the attached drawings in which:

FIG. 1 is a view for explaining an example of an MC error;
FIG. 2 is a flowchart of a method of processing a digital motion picture, according to a preferred embodiment of the present invention;
FIGS. 3A through 3C are graphs for explaining the correlations between neighboring pixels;
FIG. 4 is a flowchart of step 10 of the method of FIG. 2, according to a preferred embodiment of the present invention;
FIG. 5 is a flowchart of step 12 of the method of FIG. 2, according to a preferred embodiment of the present invention;
FIG. 6 is a flowchart of step 10 of the method of FIG. 2, or step 32 of FIG. 4, according to a preferred embodiment of the present invention;
FIG. 7 is a diagram of an example of an MC error image;
FIG. 8 is a flowchart of step 70 of FIG. 6, according to a preferred embodiment of the present invention;
FIG. 9 shows an example of an MB to aid in understanding a process of calculating first and second sums of FIG. 8;
FIG. 10 is a flowchart of step 72 of FIG. 6, according to a preferred embodiment of the present invention;
FIGS. 11A through 11E show examples of horizontal blocks to aid in understanding step 72 of FIG. 6;
FIGS. 12A through 12F illustrate step 172 of calculating a reference value in FIG. 10, according to preferred embodiments of the present invention;
FIG. 13 is a flowchart of step 12 of FIG. 2 or step 56 of FIG. 5, according to a preferred embodiment of the present invention;
FIG. 14 is a block diagram of an apparatus for processing a digital motion picture, according to a preferred embodiment of the present invention;

FIG. 15 is a block diagram of a coder of the apparatus of FIG. 14, according to a preferred embodiment of the present invention;

FIG. 16 is a block diagram of a decoder of the apparatus of FIG. 14, according to a preferred embodiment of the present invention;

FIG. 17 is a block diagram of a coder of the apparatus of FIG. 14, or a predicted error image generator of FIG. 15, according to a preferred embodiment of the present invention;

FIG. 18 is a block diagram of a block determiner of FIG. 17, according to a preferred embodiment of the present invention;

FIG. 19 is a block diagram of an error predictor of FIG. 17, according to a preferred embodiment of the present invention; and

FIG. 20 is a block diagram of a decoder of FIG. 14, or a first MC error image recovery unit of FIG. 16, according to a preferred embodiment of the present invention.

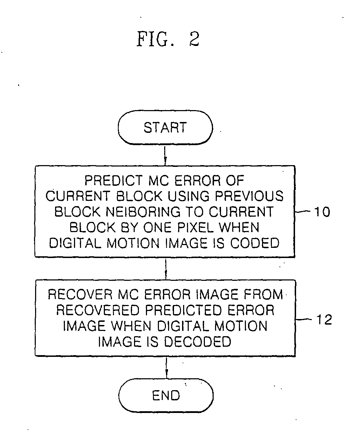

Hereinafter, a method of processing a digital motion picture, according to the present invention, will be described with reference to FIG. 2.

FIG. 2 is a flowchart of a method of processing a digital motion picture, according to a preferred embodiment of the present invention. The method includes step 10 of coding a digital motion picture and step 12 of decoding the coded digital motion picture.

Referring to FIG. 2, in step 10, a digital motion picture is coded. In other words, an MC error image, which is the result of removing temporal redundancy between digital motion pictures neighboring in time, is divided into blocks. Here, the blocks may be horizontal or vertical blocks, which will be described later. An MC error of a block to be currently processed (hereinafter referred to as a current block) is predicted using a neighboring block at a distance of one that was previously processed (hereinafter referred to as a previous block). An orthogonal transform (OT) is performed on a predicted error image consisting of the predicted MC errors. Here, the result of removing the temporal redundancy from the digital motion picture is obtained using a motion vector that is generated from the digital motion picture. This is disclosed in standards such as MPEG-1, -2, and -4, Video, H.261, H.263, and H.264.

When step 10 is performed in the unit of MB of the MC error image, each MB is segmented into horizontal or vertical blocks. Here, an MC error of each of horizontal or vertical blocks to be currently processed is predicted using a horizontal or vertical block that was previously processed and that neighbors the horizontal or vertical block by one pixel. In other words, all MC errors are predicted for the respective horizontal or vertical blocks of each of the MBs the MC error image includes to determine a predicted error image consisting of the predicted MC errors for the MC error image.

After step 10, in step 12, when the coded digital motion picture is decoded, the predicted error image is recovered by performing an inverse orthogonal transform (IOT), and the MC error image is recovered from the recovered predicted error image.

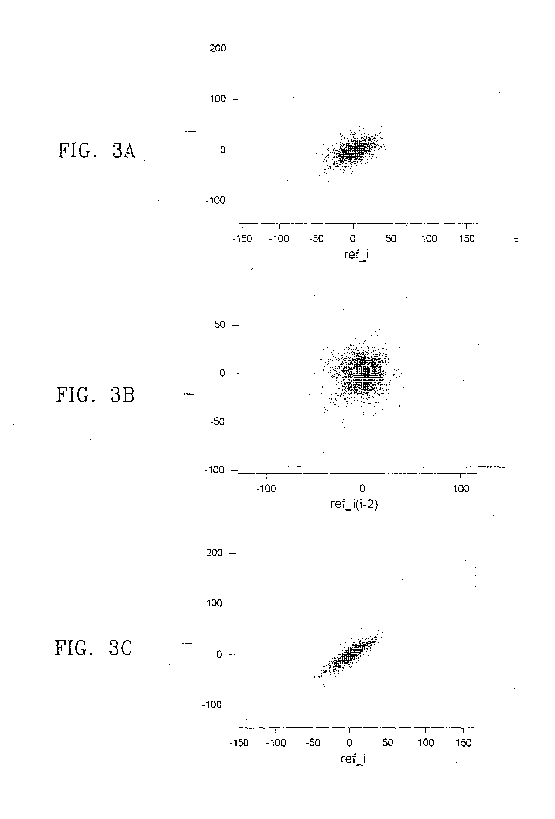

The principle of the method of processing of the digital motion picture according to the present invention will now be explained with reference to FIGS. 3A through 3C.

FIGS. 3A through 3C are graphs for explaining correlations between neighboring pixels.

FIG. 3A shows correlation between neighboring pixels at a unit pixel distance from a reference pixel in all directions, FIG. 3B shows correlation between neighboring pixels at twice a unit pixel distance from a reference pixel in all directions, and FIG. 3C shows correlation between pixels closest to a reference pixel in all directions. In each of FIGS. 3A and 3C, luminance level error values **ref_i** of neighboring pixels at a unit pixel distance from a reference pixel are plotted along the horizontal axis, and a luminance level error value **i** of the neighboring pixel is plotted along the vertical axis. In FIG. 3B, luminance level error values **ref_ i(i-2)** of neighboring pixels at twice a unit pixel distance from a reference pixel are plotted along the horizontal axis, and a luminance level error value **i** of the neighboring pixel is plotted along the vertical axis.

A correlation coefficient of the data graphed in FIG. 3A is relatively large: 0.510. The large value of the correlation coefficient indicates that the correlation between neighboring pixels at a unit pixel distance is high. However, the correlation coefficient of the data graphed in FIG. 3B is very small: 0.032, meaning that the correlation between neighboring pixels at twice a unit pixel distance is low. The correlation coefficient of the data graphed in FIG. 3C is very high: 0.861, indicating that the correlation between pixels similar to the reference pixel among neighboring pixels at a unit pixel distance from the reference pixel are very high.

Thus, in step 10 of FIG. 2, an MC error of a current block is predicted using a previous block neighboring by a unit pixel distance to the current block when the digital motion picture is coded.

Preferred embodiments of the method of processing a digital motion picture according to the present invention will now be described with reference to the attached drawings.

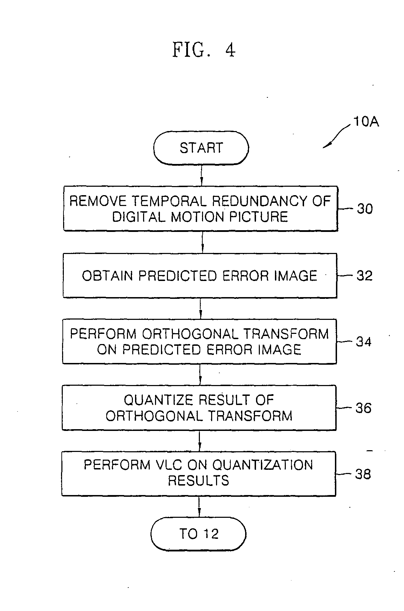

FIG. 4 is a flowchart of a preferred embodiment 10A of step 10 of the method of FIG. 2. Step 10A includes step 30 of removing temporal redundancy of a digital motion picture, steps 32, 34, and 36 of removing spacial redundancy of the digital motion picture, and step 38 of performing variable length coding (VLC).

Referring to FIG. 4, in step 30, temporal redundancy of a digital motion picture is removed and the resulting image is determined as an MC error image.

After step 30, in step 32, the MC error image is divided into horizontal or vertical blocks and an MC error of a current horizontal or vertical block is predicted using a previous horizontal or vertical block neighboring by a unit pixel distance to the current horizontal block, to obtain a predicted error image consisting of the predicted MC errors.

After step 32, in step 34, an OT is performed on the predicted error image. Here, the OT may be a DCT or the like and may contribute to concentrating energy and diminishing correlation between pixels.

After step 34, in step 36, the result of the OT is quantized. For example, the result of the OT can be compressed by performing quantization corresponding to information concerning a quantization magnitude or the like that may be input from an external source.

In other words, steps 32, 34, and 36 are performed to remove spatial redundancy from the result of removing temporal redundancy of a digital motion picture.

After step 36, in step 38, VLC is performed on the quantization results so as to be suitable for a predetermined bit rate. Here, step 38 is performed to remove statistical redundancy from the result of removing spatial redundancy.

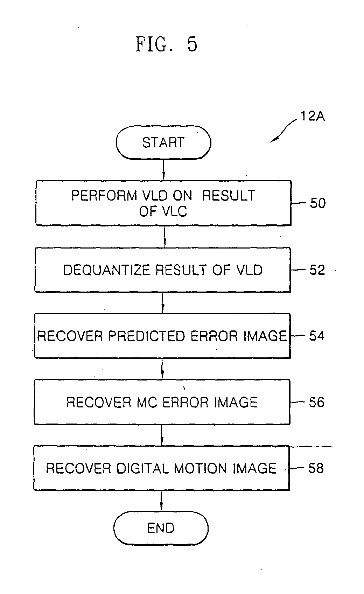

FIG. 5 is a flowchart of a preferred embodiment 12A of step 12 of the method of FIG. 2, according to the present invention. Step 12A includes steps 50 and 52 of performing variable length decoding (VLD) and inverse quantization, and steps 54, 56, and 58 of recovering a predicted error image, an MC error image, and a digital motion picture.

Referring to FIG. 5, in step 50, VLD is performed on the result of VLC.

Step 10 of the method of FIG. 2, or step 10A shown in FIG. 4, may be performed by a coder (not shown), and step 12 of the method of FIG. 2, or step 12A shown in FIG. 5, may be performed by a decoder (not shown). Here, the result of final coding by the coder, i.e., the result of VLC, may be transmitted to the decoder or stored in an additional storage (not shown). In this case, the decoder reads and decodes the result of VLC which is transmitted from the coder or stored in the additional storage.

After step 50, in step 52, the result of VLD is inverse-quantized. After step 52, in step 54, IOT is performed on the inverse quantization results to recover a predicted error image. After step 54, in step 56, an MC error image is recovered from the recovered predicted error image. After step 56, in step 58, a digital motion picture is recovered using the recovered MC error image.

Step 10 of coding the digital motion picture in the method of FIG. 2 will be explained in more detail with reference to the attached drawings.

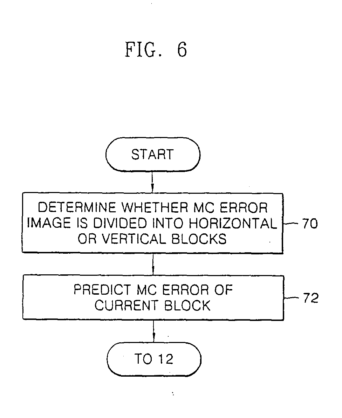

FIG. 6 is a flowchart of a preferred embodiment of step 10 of the method of FIG. 2, or step 32 shown in FIG. 4, according to the present invention, including step 70 of determining a direction along which an MC error image is to be analyzed and step 72 of predicting MC errors.

In step 70, a determination is made as to whether each of MBs of which an MC error image consists is divided into horizontal or vertical blocks.

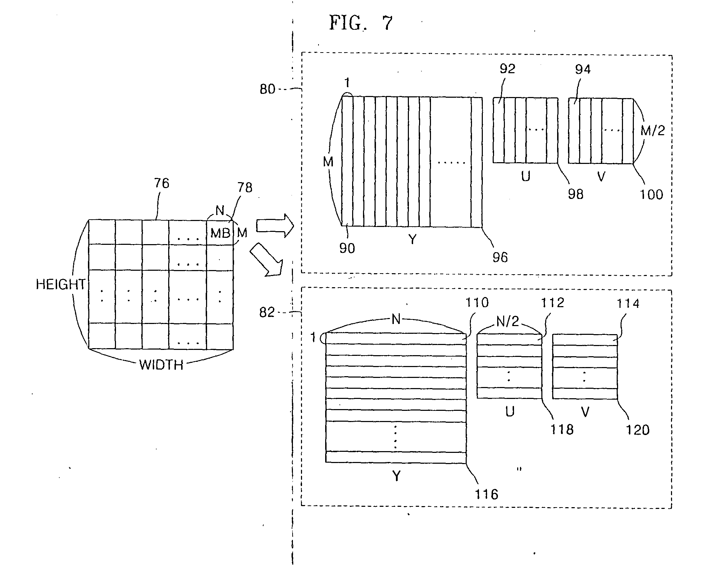

FIG. 7 is a diagram of an example of an MC error image 76 which consists of MBs 78, an MB 80 being segmented into vertical blocks, and an MB 82 being segmented into horizontal blocks.

Referring to FIG. 7, the MC error image 76 consists of a plurality of MBs 78 and has a predetermined width and height. Here, each of the MBs 78 has an $N \times M$ (breadth $\times$ length) size, where $N$ and $M$ may or may not be equal. According to most standards, $N$ and $M$ are each "16." As shown in FIG. 7, each of the MBs 78 may be determined to be divided into vertical or horizontal blocks.

Here, the MB 80 consists of vertical blocks 96 with respect to a luminance component Y, vertical blocks 98 with respect to a color component U, and vertical blocks 100 with respect to a color component V. The length $M/2$ of each of the vertical blocks 98 or 100 with respect to the color component U or V may be half the length $M$ of each of the vertical blocks 96 with respect to the luminance component Y.

Similarly, the MB 82 consists of horizontal blocks 116 with respect to a luminance component Y, horizontal blocks 118 with respect to a color component U, and horizontal blocks 120 with respect to a color component V. Here, the width $N/2$ of each of the horizontal blocks 118 or 120 with respect to the color component U or V may be half the width $N$ of each of the horizontal blocks 116 with respect to the luminance component Y.

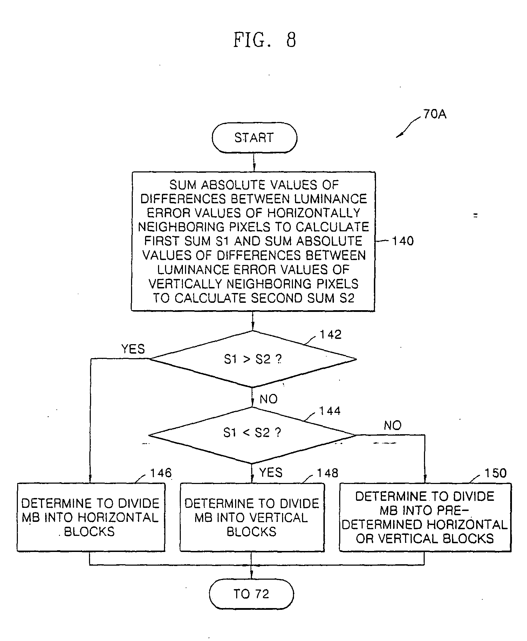

FIG. 8 is a flowchart of a preferred embodiment 70A of step 70 of FIG. 6, according to the present invention, including step 140 of calculating first and second sums S1 and S2 and steps 142, 144, 146, 148, and 150 of determining a direction along which an MB is to be analyzed according to sizes of the first and second sums S1 and S2.

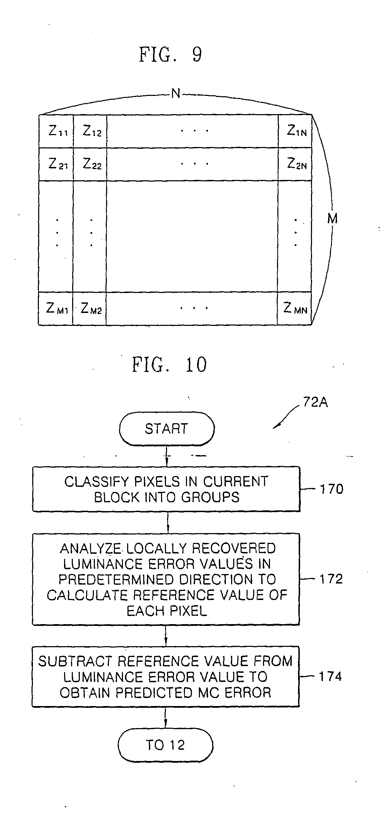

FIG. 9 is a diagram of an example of an arbitrary MB 78 to aid in understanding a process of calculating the first and second sums S1 and S2 of FIG. 8. The MB 78 includes $N \times M$ luminance error values $Z_{11}, Z_{12}, ..., Z_{1N}, Z_{21}, Z_{22}, ..., Z_{2N}, ..., Z_{M1}, Z_{M2}, ..., $ and $Z_{MN}$.

To perform step 70 of FIG. 6, in step 140, absolute values of differences between luminance error values of horizontally neighboring pixels of FIG. 9 in the MB 78 are summed as shown in Equation 1 to obtain the first sum S1, and absolute values of differences between luminance error values of vertically neighboring pixels of FIG. 9 are summed as shown in Equation 2 to obtain the second sum S2.

$$S1 = \sum_{i=1}^{M} \sum_{j=1}^{N-1} \left| Z_{ij} - Z_{i(j+1)} \right| \qquad \ldots(1)$$

$$S2 = \sum_{l=1}^{N} \sum_{k=1}^{M-1} \left| Z_{kl} - Z_{(k+1)l} \right| \qquad \ldots(2)$$

After step 140, in step 142, a determination is made as to whether the first sum S1 is larger than the second sum S2. If it is determined in step 142 that the first sum S1 is larger than the second sum S2, it is determined in step 146 to divide the MB 78 into horizontal blocks 82 as shown in FIG. 7.

If it is determined in step 142 that the first sum S1 is not larger than the second sum S2, a determination is made in step 144 as to whether the first sum S1 is smaller than the second sum S2. If it is determined in step 144 that the first sum S1 is smaller than the second sum S2, it is determined in step 148 to divide the MB 78 into vertical blocks 80 as shown in FIG. 7. If it is determined that the first sum S1 is equal to the second sum S2, it is determined in step 150 to divide the MB 78 into predetermined horizontal or vertical blocks. The predetermined horizontal or vertical blocks are the result of determining in advance whether to divide the MB 78 into horizontal blocks or into vertical blocks when the first sum S1 is equal to the second sum S2.

After step 70 of FIG. 6, in step 72, an MC error of a current block is predicted using a previous block neighboring by a unit pixel distance to the current block to obtain a predicted error image consisting of the predicted MC errors.

FIG. 10 is a flowchart of a preferred embodiment 72A of step 72 of FIG. 6, according to the present invention, including steps 170, 172, and 174 of predicting MC errors using luminance error values and reference values.

According to an aspect of the present invention, step 72 of FIG. 6 may include only steps 172 and 174 of FIG. 10. In this case, in step 172, a reference value of each of pixels included in a current horizontal or vertical block is calculated using locally recovered luminance error values of pixels included in a previous horizontal or vertical block. The coder generally includes a local decoding unit (not shown) which performs the same operation as the decoder. Here, the local decoding unit recovers the same luminance error values to be recovered by the decoder, which when recovered by the local decoding unit are called locally recovered luminance error values.

After step 172, in step 174, the reference value is subtracted from a luminance error value of each of the pixels included in the current horizontal or vertical block and the subtraction result is determined as a predicted MC error of the corresponding pixel.

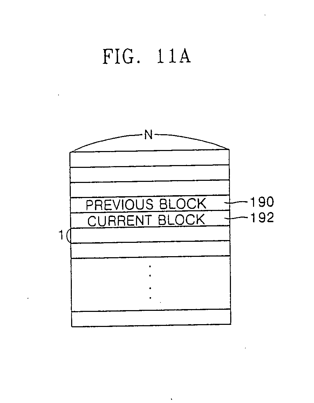

FIGS. 11A through 11 E are diagrams of examples of horizontal blocks to aid in understanding step 72 of FIG. 6.

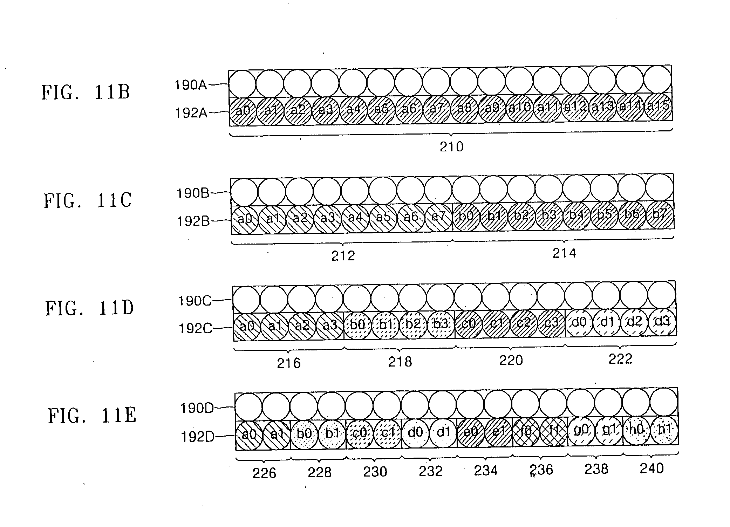

FIG. 11A shows an example of the horizontal block 116, 118, or 120 which has been divided to analyze the MB 78 in a horizontal direction. Referring to FIG. 11A, reference numeral 190 denotes a previous block, and reference numeral 192 denotes a current block. FIG. 11B shows pixels a0, a1, a2, a3, a4, a5, a6, a7, a8, a9, a10, a11, a12, a13, a14, and a15 in a current horizontal block 192A which are classified into a group 210. FIG. 11 C shows pixels a0, a1, a2, a3, a4, a5, a6, a7, b0, b1, b2, b3, b4, b5, b6, and b7 in a current horizontal block 192B which are classified into groups 212 and 214. FIG. 11D shows pixels a0, a1, a2, a3, b0, b1, b2, and b3, c0, c1, c2, c3, d0, d1, d2, and d3 in a current horizontal block 192C which are classified into groups 216, 218, 220, and 222. FIG. 11E shows pixels a0, a1, b0, b1, c0, c1, d0, d1, e0, e1, f0, f1, g0, g1, h0, and h1 in a current horizontal block 192D which are classified into groups 226, 228, 230, 232, 234, 236, 238, and 240.

According to another aspect of the present invention, step 72 of FIG. 6 may include steps 170, 172, and 174 of FIG. 10. In this case, in step 170, pixels in a current block are classified into at least one group, for example, a predetermined number of groups. Here, the predetermined number may be determined by a user. For example, pixels a0, a1, a2, a3, a4, a5, a6, a7, a8, a9, a10, a11, a12, a13, a14, and a15 in the CURRENT BLOCK 192 of a current horizontal block may be classified into one, two, four, or eight groups as shown in FIG. 11 B, 11C, 11D, or 11E.

After step 170, in step 172, locally recovered luminance error values of pixels included in a previous block are analyzed in a predetermined direction, which is equally applied to each of groups of pixels, to obtain a reference value. Here, the predetermined direction may be determined by the user.

For example, when a reference value of each of the pixels a0, a1, a2, a3, a4, a5, a6, a7, a8, a9, a10, a11, a12, a13, a14, and a15 in the group 210 of FIG. 11B is calculated, locally recovered luminance error values of pixels included in a reference block 190A of a previous horizontal block are analyzed in the same direction. In other words, it is assumed that the locally recovered luminance error values of the pixels in the previous horizontal block 190A are analyzed in a straight line direction when a reference value of the pixel a2 in the current horizontal block 192A is calculated. Even when calculating a reference value of the pixel a6 belonging to the same group as the pixel a2 included in the current horizontal block 192A, the locally recovered luminance error values of the pixels in the horizontal block 190A are analyzed in the straight line direction. Similarly, when a reference value of each of pixels in the groups 212, 214, 216, 218, 220, 222, 226, 228, 230, 232, 234, 236, 238, and 240 of FIGS. 11 C through 11E is calculated, locally recovered luminance error values of pixels included in a previous horizontal block 190B, 190C, or 190D are analyzed in the same direction.

A reference value of each of pixels in a first processed block 90, 92, 94, 110, 112, or 114 in the MB 80 or 82 of FIG. 7 may be set to "0" because there is no previous block.

FIGS. 12A through 12F show preferred embodiments of step 172 shown in FIG. 10 of calculating a reference value **r(x)**. Here, the horizontal direction in each of FIGS. 12A through 12F denotes a position.

A reference value **r(x)** of a pixel 260 at a random position **x** of a current block 192 can be calculated using Equation 3, 4, 5, 6, 7, or 8:

$$r(x) = 0 \qquad (3)$$

wherein **r(x)=0** indicates that the reference value **r(x)** of the pixel 260 at the random position **x** is calculated regardless of locally recovered luminance error values of pixels 262, 264, and 266 in a previous block 190 as shown in FIG. 12A.

$$r(x) = p(x) \qquad (4)$$

wherein **p(x)** denotes a locally recovered luminance error value of the pixel 264 at position **x** of the previous block 190. Here, **r(x)=p(x)** indicates that the reference value **r(x)** of the pixel 260 is calculated using only a locally recovered luminance error value **p(x)** of the pixel 264 at position **x** of the previous block 190 as shown in FIG. 12B. In this case, a predetermined direction along which the previous block 190 is to be analyzed is a straight line direction.

$$r(x) = p(x - 1) \qquad (5)$$

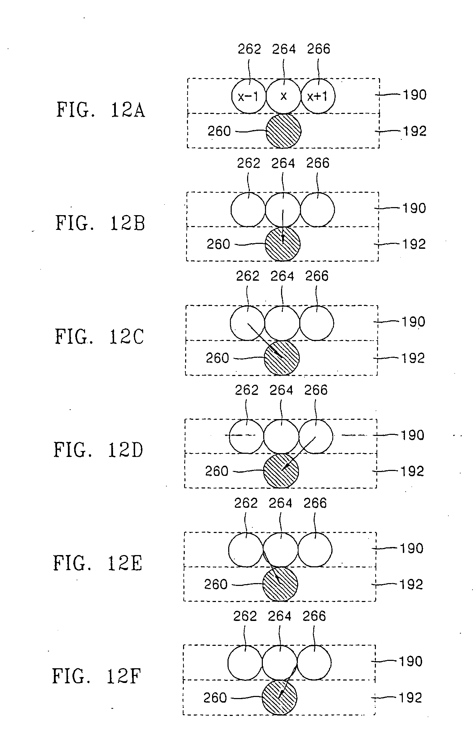

wherein **r(x)=p(x-1)** indicates that the reference value **r(x)** of the pixel 260 is calculated using only a locally recovered luminance error value **p(x-1)** of the pixel 262 at a position **x-1** of the previous block 190 as shown in FIG. 12C. In this case, a predetermined direction along which the previous block 190 is to be analyzed is a leftward inclined direction.

$$r(x) = p(x + 1) \qquad (6)$$

wherein **r(x)=p(x+1)** indicates that the reference value **r(x)** of the pixel 260 is calculated using only a locally recovered luminance error value **p(x+1)** of the pixel 266 at a position **x+1** of the referenee block 190 as shown in FIG. 12D. In this case, a predetermined direction along which the previous block 190 is to be analyzed is a rightward inclined direction.

$$r(x) = \frac{p(x - 1) + P(x) + 1}{2} \qquad (7)$$

wherein **r(x)=(p(x-1)+p(x)+1)/2** indicates that the reference value **r(x)** of the pixel 260 is calculated using a median value of locally recovered luminance error values **p(x-1)** and **p(x)** of the pixels 262 and 264 at positions **x-1** and **x** of the previous block 190 as shown in FIG. 12E. In this case, a predetermined direction along which the previous block 190 is to be analyzed is a leftward inclined direction.

$$r(x) = \frac{p(x) + p(x + 1) + 1}{2} \qquad (8)$$

wherein **r(x)=p(x)+p(x+1)+1)/2** indicates that the reference value **r(x)** of the pixel 260 is calculated using a median value of locally recovered luminance error values **p(x)** and **p(x+1)** of the pixels 264 and 266 at positions **x** and **x+1** of the previous block 190 as shown in FIG. 12F. In this case, a predetermined direction along which the previous block 190 is to be analyzed is a rightward inclined direction.

As the current block 192 is minutely divided into groups of pixels, an MC error decreases while an overhead increases. Thus, a tradeoff between the overhead and the grouping extent may be set.

Step 12 of decoding the digital motion picture in the method of FIG. 2 will now be described in more detail with reference to the attached drawings.

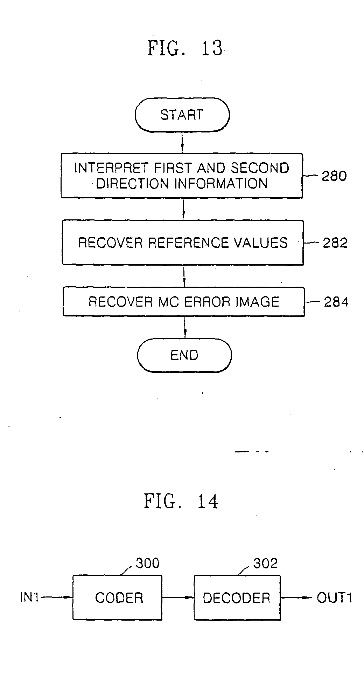

FIG. 13 is a flowchart for explaining a preferred embodiment of step 12 of the method of FIG. 2, or step 56 of FIG. 5, according to the present invention, including step 280 of interpreting first and second direction information and steps 282 and 284 of recovering reference values and an MC error image.

Referring to FIG. 13, in step 280, first and second direction information is interpreted. Here, the first direction information indicates whether the coer divides each of MBs of an MC error image into horizontal or vertical blocks. Also, the second direction information indicates a predetermined direction along which locally recovered luminance error values of pixels included in a previous block are analyzed when the coder calculates reference values. The first and second direction information may be coded in step 10 of coding the digital motion picture, and decoded in step 50 of FIG. 5.

After step 280, in step 282, reference values are recovered using the interpreted second direction information and recovered luminance error values of pixels in a previous block. Here, unlike locally recovered luminance error values, "the recovered luminance error values" refers to luminance error values which are recovered by the decoder:

For example, the second direction information is interpreted to infer a predetermined direction along which a previous block has been analyzed when the coder generates reference values, and the reference values are recovered using the inferred predetermined direction and recovered luminance error values.

After step 282, in step 284, an MC error image is recovered using the recovered reference values, the interpreted first direction information, and a recovered predicted error image. For example, recovered reference values and a recovered predicted error image are added to recover luminance error values of each of blocks of an MC error image, and the luminance error values recovered in all blocks are then put together in a horizontal or vertical direction, as inferred from the interpreted first direction information, to recover the MC error image.

The structure and operation of an apparatus for processing a digital motion picture according to the present invention will now be explained with reference to the attached drawings.

FIG. 14 is a block diagram of an apparatus for processing a digital motion picture according to the present invention. Referring to FIG. 14, the apparatus includes a coder 300 and a decoder 302.

The apparatus of FIG. 14 performs the method of FIG. 2.

For example, to perform step 10, the coder 300 receives an MC error image, which is the result of removing temporal redundancy of a digital motion picture, via an input node IN1, divides the MC error image into horizontal or vertical blocks, predicts an MC error of a current block using a previous block neighboring by a unit pixel distance to the current block, performs OT on a predict error image consisting of the predicted MC errors, and outputs the coded result to the decoder 302.

To carry out step 12, the decoder 302 recovers the predicted error image by performing IOT, recovers the MC error image from the recovered predicted error image, and outputs the recovered digital motion picture via an output node OUT1.

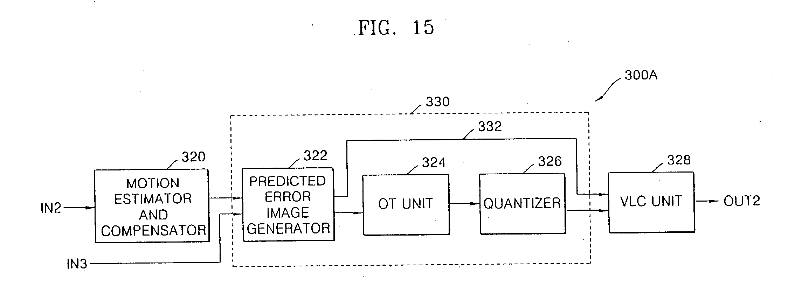

FIG. 15 is a block diagram of a preferred embodiment 300A of the coder 300 of FIG. 14, including a motion estimator and compensator 320, a predicted error image generator 322, an OT unit 324, a quantizer 326, and a VLC unit 328.

The coder 300A of FIG. 15 performs step 10A shown in FIG. 4.

To perform step 30, the motion estimator and compensator 320 removes temporal redundancy of a digital motion picture, which is input via an input node IN2, and outputs the result as an MC error image to the predicted error image generator 322.

To execute step 32, the predicted error image generator 322 receives the MC error image from the motion estimator and compensator 320, divides the MC error image into horizontal or vertical blocks, predicts an MC error of a current block using a previous block neighboring by a unit pixel distance to the current block, and outputs a predicted error image consisting of the predicted MC errors to the OT unit 324. Here, the predicted error image generator 322 may output first and second direction information 332, as previously described, to the VLC unit 328. In order to output the first and second direction information 332, the predicted error image generator 322 may receive information concerning a predetermined direction and a predetermined number of groups into which a current block is to be segmented via an input node IN3.

To carry out step 34, the OT unit 324 performs an OT on the predicted error image input from the predicted error image generator 322 and outputs the result of the OT to the quantizer 326.

To perform step 36, the quantizer 326 quantizes the result of the OT and outputs the quantization results to the VLC unit 328.

Here, the predicted error image generator 322, the OT unit 324, and the quantizer 326 serve to remove spatial redundancy from the result of removing temporal redundancy of the digital motion picture.

To carry out step 38, the VLC unit 328 performs VLC on the quantization results and outputs the result of VLC to the decoder 302 via an output node OUT2. Here, the result of VLC output via the output node OUT2 may not be transmitted to the decoder 302 but instead stored in an additional storage as described above.

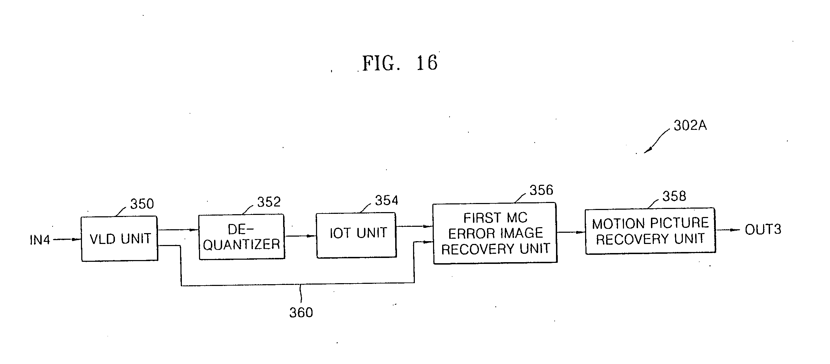

FIG. 16 is a block diagram of a preferred embodiment 302A of the decoder 302 of FIG. 14, including a VLD unit 350, an inverse quantizer 352, an IOT unit 354, a first MC error image recovery unit 356, and a motion picture recovery unit 358.

The decoder 302A of FIG. 16 performs step 12A of FIG. 5.

To perform step 50, the VLD unit 350 receives the result of VLC via an input node IN4 and performs VLD on the result of VLC. Here, the VLD unit 350 outputs a result 360, obtained by decoding first and second direction information of the results of VLD, to the first MC error image recovery unit 356.

To carry out step 52, the inverse quantizer 352 inverse-quantizes the results of VLD input from the VLD unit 350 and outputs the inverse quantization results to the IOT unit 354.

To perform step 54, the IOT unit 354 performs IOT on the inverse quantization results input from the inverse quantizer 352 and outputs the result of IOT as a recovered predicted error image to the first MC error image recovery unit 356.

To carry out step 56, the first MC error image recovery unit 356 recovers an MC error image from the recovered predicted error image input from the IOT unit 354 and outputs the recovered MC error image to the motion picture recovery unit 358.

To perform step 58, the motion picture recovery unit 358 recovers a digital motion picture from the recovered MC error image input from the first MC error image recovery unit 356 and outputs the recovery result via an output node OUT3.

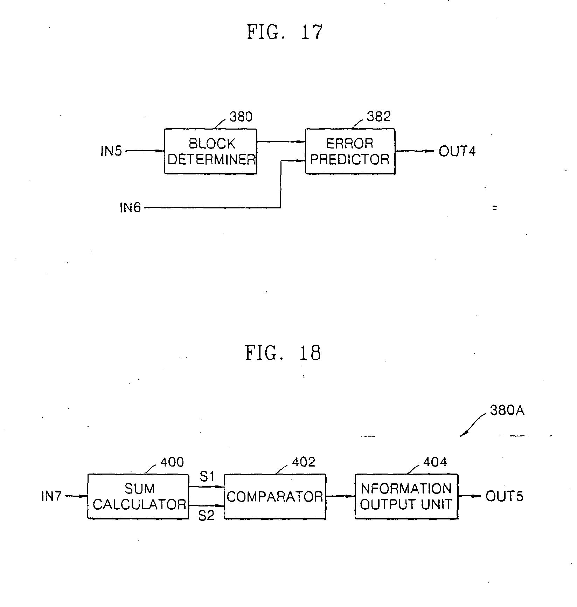

FIG. 17 is a block diagram of the coder 300 of FIG. 14, or the predicted error image generator 322 of FIG. 15, according to a preferred embodiment of the present invention, including a block determiner 380 and an error predictor 382.

The block determiner 380 and the error predictor 382 of FIG. 17 perform steps 70 and 72 of FIG. 6, respectively.

To perform step 70, the block determiner 380 determines whether each of MBs of an MC error image input via an input node IN5 is divided into horizontal or vertical blocks and outputs the determination result to the error predictor 382.

To carry out step 72, the error predictor 382 predicts an MC error of a current block using a previous block neighboring by a unit pixel distance to the current block in response to the determination result of the block determiner 380, and outputs a predicted error image consisting of predicted MC errors of blocks via an output node OUT4.

FIG. 18 is a block diagram of a preferred embodiment of 380A of the block determiner 380 of FIG. 17, including a sum calculator 400, a comparator 402, and an information output unit 404.

The block determiner 380A of FIG. 18 executes step 70A of FIG. 8.

The sum calculator 400 performs step 140 of FIG. 8. In other words, the sum calculator 400 sums absolute values of differences between luminance error values of horizontally neighboring pixels in an MB input via an input node IN7 to calculate a first sum S1, as in Equation 1 above. The sum calculator 400 sums absolute values of differences between luminance error values of vertically neighboring pixels in the MB input via the input node IN7 to calculate a second sum S2, as in Equation 2 above.

To perform steps 142 and 144, the comparator 402 compares the first and second sums S1 and S2 input from the sum calculator 400 and outputs the comparison result to the information output unit 404.

To execute steps 146, 148, and 150, the information output unit 404 determines whether the MB is divided into horizontal or vertical blocks in response to the comparison result of the comparator 402 and outputs information indicating the determination result to the error predictor 382 via an output node OUT5.

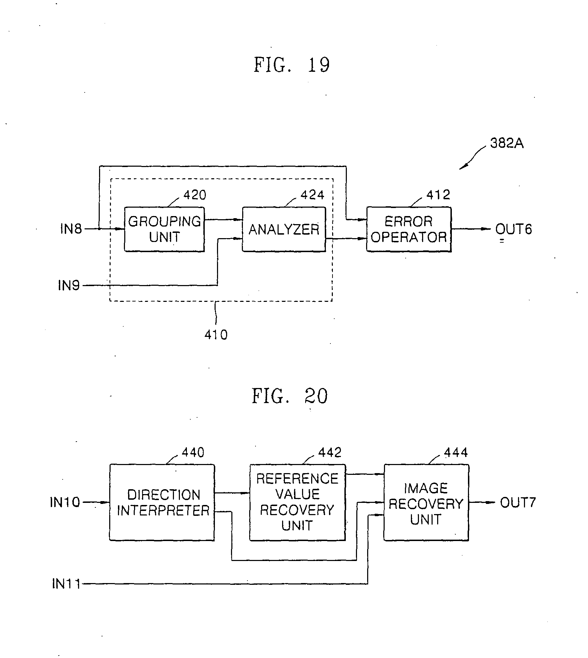

FIG. 19 is a block diagram of a preferred embodiment 382A of the error predictor 382 of FIG. 17, according to a preferred embodiment of the present invention, including a reference value generator 410 and an error operator 412.

The error predictor 382A of FIG. 19 performs step 72A of FIG. 10.

According to an aspect of the present invention, when step 72 includes steps 172 and 174 of FIG. 10 as describe above, the reference value generator 410 may include only an analyzer 424. According to another aspect of the present invention, when step 72 includes steps 170, 172, and 174 of FIG. 10, the reference value generator 410 may include a grouping unit 420 and the analyzer 424.

To carry out steps 170 and 172, the reference value generator 410 generates a reference value of each of pixels in a current block input via an input node IN8 from locally recovered luminance error values of pixels in a previous block input via an input node IN9, and outputs the generated reference value to the error operator 412. For example, to perform step 170, the grouping unit 420 classifies the pixels in the current block input via the input node IN8 into a predetermined number of groups as shown in FIGS. 11 B through 11E, and outputs information on the resulting groups to the analyzer 422.

When the reference value generator 410 includes only the analyzer 424, to perform step 172, the analyzer 424 analyzes the locally recovered luminance error values of the pixels in the previous block input via the input node IN9 in a predetermined direction to generate the reference value, and outputs the generated reference value to the error operator 412.

If the reference value generator 410 includes the grouping unit 420 and the analyzer 424, to carry out step 172, the analyzer 424 analyzes the locally recovered luminance error values of the pixels in the previous block input via the input node IN9 in a predetermined direction, equally applied to each group of pixels, to generate the reference value, and outputs the generated reference value to the error operator 412. For example, the analyzer 424 determines from the resulting groups input from the grouping unit 420 whether pixels whose reference values are to be calculated belong to the same group, and calculates reference values of pixels belonging to the same group in the same predetermined direction as previously described.

To perform step 174, the error operator 412 subtracts the reference value input from the analyzer 424 from a luminance error value of each of the pixels in the current block input via the input node INB, determines the subtraction result as a predicted MC error of each of pixels of each block, and outputs the predicted MC error via an output node OUT6.

FIG. 20 is a block diagram of the decoder 302 of FIG. 14, or the first MC error image recovery unit 356 of FIG. 16, according to a preferred embodiment of the present invention, including a direction interpreter 440, a reference value recovery unit 442, and an image recovery unit 444.

The direction interpreter 440, the reference value recovery unit 442, and the image recovery unit 444 of FIG. 20 perform steps 280, 282, and 284 of FIG. 13, respectively.

To perform step 280, the direction interpreter 440 interprets first and second direction information input via an input node IN10, outputs the interpreted first direction information to the image recovery unit 444, and outputs the interpreted second direction information to the reference value recovery unit 442. Here, when the block diagram of FIG. 20 corresponds to the preferred embodiment of the first MC error image recovery unit 356 of FIG. 16, the first and second direction information, which is input to the direction interpreter 440 via the input node IN10, may be output from the VLD unit 350 of FIG. 16.

To carry out step 282, the reference value recovery unit 442 recovers reference values from the second direction information interpreted by the direction interpreter 440 and recovered luminance error values of pixels in a previous block, and outputs the recovered reference values to the image recovery unit 444.

To execute step 284, the image recovery unit 444 recovers an MC error image from the recovered reference values input from the reference value recovery unit 442, the interpreted first direction information input from the direction interpreter 440, and a recovered predicted error image input via an input node IN11, and outputs the recovery result via an output node OUT7. Here, when the block diagram of FIG. 20 corresponds to the preferred embodiment of the first MC error image recovery unit 356 of FIG. 16, the recovered predicted error image, which is input to the image recovery unit 444 via the input node IN11, may be output from the IOT unit 354 of FIG. 16.

Hereinafter, the method and apparatus for processing a digital motion picture according to the present invention will be compared with a conventional method and apparatus for processing a digital motion picture, in terms of power. Here, power refers to the result of summing squares of predicted MC errors of $P \times Q$ pixels when an MC error image has a size of $P \times Q$ (breadth x length).

Table 1 below lists power comparison data obtained by processing five digital motion pictures using the digital motion picture processing method and apparatus according to the present invention and a conventional digital motion picture processing method and apparatus, when a predetermined number of groups of pixels was "1", a predetermined direction was determined as in Equation 3 or 4 above, a quantization magnitude was "5", and M=N=16.

[Table 1]

| Digital Motion Picture No. | Conventional Art | Present Invention |
|---|---|---|
| 1 | 7249151 | 4635764 |
| 2 | 778857 | 642534 |
| 3 | 2723095 | 1854314 |
| 4 | 2274103 | 1824485 |
| 5 | 16290092 | 8592750 |

As shown in Table 1, the digital motion picture processing method and apparatus according to the present invention consume less power than the conventional digital motion picture processing method and apparatus. This reduction in power indicates that an amount of data to be coded is reduced and thus coding efficiency is considerably improved by the present invention.

Table 2 lists power comparison data for the digital motion picture processing method and apparatus according to present invention and the conventional digital motion picture processing method and apparatus when the quantization magnitude is changed from "5" to "15", under the above assumption.

[Table2]

| Digital Motion Picture No. | Conventional Art | Present Invention |
| --- | --- | --- |
| 1 | 7249151 | 6683817 |
| 2 | 778857 | 770559 |
| 3 | 2723095 | 2473157 |
| 4 | 2274103 | 2188026 |
| 5 | 16290092 | 11899225 |

As can be seen in Table 2, even when the quantization magnitude is changed to "15", the digital motion picture processing method and apparatus according to the present invention consumes less power than the conventional digital motion picture processing method and apparatus. In conclusion, regardless of the quantization magnitude, the digital motion picture processing method and apparatus according to the present invention consumes less power than the conventional digital motion picture processing method and apparatus.

As described above, a method and apparatus for processing a digital motion picture according to the present invention can be easily applied to a method and apparatus for processing a digital motion picture according to the prior art. Also, since an MC error can be efficiently predicted from an MC error image, impulse components of an MC error to be coded can be alleviated to reduce the MC error itself. As a result, data compression efficiency of OT can be improved and correlation among pixels can be lowered. Moreover, even when an MB includes a plurality of different motion components, error around the edge of the MC error image can be relatively reduced, in comparison to the prior art.

While the present invention has been particularly shown and described with reference to exemplary embodiments thereof, it will be understood by those of ordinary skill in the art that various changes in form and details may be made therein without departing from the scope of the present invention as defined by the following claims.

**Claims**

**1.** A method of processing a digital motion picture, comprising:

coding the digital motion picture by dividing a motion compensation error image, which is the result of removing temporal redundancy of the digital motion picture, into horizontal or vertical blocks, predicting a motion compensation error of a current block using a previous block neighboring by a unit pixel distance to the current block, and performing an orthogonal transform on a predicted error image consisting of the predicted motion compensation errors; and
decoding the coded digital motion picture by recovering the predicted error image by performing an inverse orthogonal transform and recovering the motion compensation error image from the recovered predicted error image,

wherein the current block means a block to be currently processed, and the previous block means a block previously processed.

**2.** The method of claim 1, wherein the coding of the digital motion picture comprises:

obtaining the motion compensation error image by removing the temporal redundancy of the digital motion picture;
dividing the motion compensation error image into the horizontal or vertical blocks, predicting the motion compensation-error of the current block using the previous block neighboring by the unit pixel distance to the current block, and obtaining the predicted error image consisting of the predicted motion compensation errors;
performing the orthogonal transform on the predicted error image;
quantizing the result of the orthogonal transform; and
performing variable length coding on the quantization results.

3. The method of claim 2, wherein the decoding of the digital motion picture comprises:

performing variable length decoding on the result of variable length coding;
inverse-quantizing the result of variable length decoding;
recovering the predicted error image by performing the inverse orthogonal transform on the inverse quantization results;
recovering the motion compensation error image from the recovered predicted error image; and
recovering the digital motion picture using the recovered motion compensation error image.

4. The method of any of claims 1 to 3, wherein obtaining the predicted error image from the motion compensation error image comprises:

determining whether each of macroblocks in the motion compensation error image is divided into horizontal or vertical blocks; and
obtaining the predicted error image by predicting the motion compensation error of the current block using the previous block neighboring by the unit pixel distance to the current block.

5. The method of claim 4, wherein determining whether each of the macroblocks in the motion compensation error image is divided into the horizontal or vertical blocks comprises:

summing absolute values of differences between luminance error values of horizontally neighboring pixels to calculate a first sum S1 and summing absolute values of differences between luminance error values of vertically neighboring pixels to calculate a second sum S2, using the equations below:

$$S1 = \sum_{i=1}^{M} \sum_{j=1}^{N-1} \left| Z_{ij} - Z_{i(j+1)} \right|$$

$$S2 = \sum_{l=1}^{N} \sum_{k=1}^{M-1} \left| Z_{kl} - Z_{(k+1)l} \right|$$

wherein **M** and **N** denote length and breadth of each of the macroblocks, respectively, and **Z** denotes the luminance error values;
determining whether the first sum S1 is larger than the second sum S2;
If it is determined that the first sum S1 is larger than the second sum S2, determining to divide each of the macroblocks into the horizontal blocks; and
if it is determined that the first sum S1 is smaller than the second sum S2, determining to divide each of the macroblocks into the vertical blocks.

6. The method of claim 5, wherein the determination as to whether each of the macroblocks in the motion compensation error image is divided into the horizontal or vertical blocks further comprises:

If it is determined that the first sum S1 is equal to the second sum S2, determining to divide each of the macroblocks into predetermined horizontal or vertical blocks.

7. The method of claim 4, 5 or 6, wherein predicting the motion compensation error of the current block using the previous block comprises:

> calculating a reference value of each of pixels in the current block using locally recovered luminance error values of pixels in the previous block; and
> subtracting the reference value from a luminance error value of each of the pixels in the current block and determining the subtraction result as the predicted motion compensation error.

**8.** The method of claim, 7, wherein calculating the reference value of each of the pixels in the current block comprises:

> classifying the pixels in the current block into at least one group of a predetermined number of groups; and
> analyzing the locally recovered luminance error values of the pixels in the previous block in a predetermined direction, equally applied to each of the at least one group, to calculate the reference value.

**9.** The method of claim 8, wherein a reference value **r(x)** of a pixel at a random position **x** of the current block is calculated using one of the equations below:

$$r(x) = 0 \,,\, r(x) = p(x) \,,\, r(x) = p(x - 1) \,,\, r(x) = p(x + 1),$$

$$r(x) = \frac{p(x - 1) + P(x) + 1}{2} \text{, and } r(x) = \frac{p(x) + p(x + 1) + 1}{2}$$

wherein **p(x)** denotes the locally recovered luminance error-value of the pixel at the position **x** of the previous block.

**10.** The method of claim 8 or 9, wherein decoding the digital motion picture comprises:

> interpreting first and second direction information;
> recovering the reference values using the interpreted second direction information and recovered luminance error values of the pixels in the previous block; and
> recovering the motion compensation error image using the recovered reference values, the interpreted first direction information, and the predicted error image,

> wherein the first direction information indicates whether each of the macroblocks in the motion compensation error image is divided into horizontal or vertical blocks, and the second direction information indicates the predetermined direction.

**11.** An apparatus for processing a digital motion picture, comprising:

> a coder arranged to divide a motion compensation error image, which is the result of removing temporal redundancy of the digital motion picture, into horizontal or vertical blocks, to predict a motion compensation error of a current block using a previous block neighboring by a unit pixel distance to the current block, and to perform an orthogonal transform on a predicted error image consisting of the predicted motion compensation errors; and
> a decoder arranged to recover the predicted error image by performing an inverse orthogonal transform and to recover the motion compensation error image from the recovered predicted error image,

> wherein the current block means a block to be currently processed, and the previous block means a block previously processed.

**12.** The apparatus of claim 11, wherein the coder comprises:

> a motion estimator and compensator arranged to remove the temporal redundancy of the digital motion picture and to output the result as the motion compensation error image;
> a predicted error image generator arranged to receive the motion compensation error image, to divide the motion compensation error image into the horizontal or vertical blocks, to predict the motion compensation error of the current block using the previous block neighboring by the unit pixel distance to the current block, and to output the predicted error image consisting of the predicted motion compensation errors;
> an orthogonal transform unit arranged to perform the orthogonal transform on the predicted error image;

a quantizer arranged to quantize the result of the orthogonal transform; and
a variable length coding unit arranged to perform variable length coding on the quantization results and outputs the result of variable length coding.

13. The apparatus of claim 11 or 12, wherein the decoder comprises:

a variable length decoding unit arranged to perform variable length decoding on the result of variable length coding;
an inverse quantizer arranged to inverse-quantize the result of variable length decoding;
an inverse orthogonal transform unit arranged to perform the inverse orthogonal transform on the inverse quantization results and to output the result of the inverse orthogonal transform as the recovered predicted error image;
a first motion compensation error image recovery unit arranged to recover the motion compensation error image from the recovered predicted error image; and
a motion picture recovery unit arranged to recover the digital motion picture from the recovered motion compensation error image.

14. The apparatus of any of claims 11 to 13, wherein the coder comprises:

a block determiner arranged to determine whether each of macroblocks in the motion compensation error image is divided into horizontal or vertical blocks and outputs the determination result; and
an error predictor arranged to predict the motion compensation error of the current block from the previous block neighboring by the unit pixel distance to the current block in response to the determination result, and outputs predicted motion compensation errors of blocks as the predicted error image.

15. The apparatus of claim 14, wherein the block determiner comprises:

a sum calculator arranged to sum absolute values of differences among luminance error values of horizontally neighboring pixels in each of the macroblocks to calculate a first sum S1, and sums absolute values of differences among luminance error values of vertically neighboring pixels in each of the macroblocks to calculate a second sum S2, using the equations below;

$$S1 = \sum_{i=1}^{M} \sum_{j=1}^{N-1} \left| Z_{ij} - Z_{i(j+1)} \right|$$

$$S2 = \sum_{l=1}^{N} \sum_{k=1}^{M-1} \left| Z_{kl} - Z_{(k+1)l} \right|$$

wherein **M** and **N** denote length and breadth of each of the macroblocks, respectively, and **Z** denotes the luminance error values,
a comparator arranged to compare the first and second sums S1 and S2 and outputs the comparison result; and
an information output unit arranged to determine whether each of the macroblocks is divided into the horizontal or vertical blocks in response to the comparison result, and outputs information indicating the determination result.

16. The apparatus of claim 14 or 15, wherein the error predictor comprises:

a reference value generator arranged to generate a reference value of each of pixels in the current block from locally recovered luminance error values of pixels in the previous block; and
an error operator arranged to subtract the reference value from a luminance error value of each of the pixels in the current block and determines the subtraction result as the predicted motion compensation error.

17. The apparatus of claim 16, wherein the reference value generator comprises:

a grouping unit arranged to classify the pixels in the current block into at least one group of a predetermined number of groups; and
an analyzer arranged to analyze the locally recovered luminance error values of the pixels in the previous block in a predetermined direction, equally applied to each of the at least one group, to generate the reference value.

18. The apparatus of claim 17, wherein the decoder comprises:

a direction interpreter arranged to interpret first and second direction information;
a reference value recovery unit arranged to recover the reference values from the interpreted second direction information and recovered luminance error values of the pixels in the previous block; and
a second motion compensation error image recovery unit arranged to recover the motion compensation error image from the recovered reference values, the interpreted first direction information, and the recovered predicted error image,

wherein the first direction information indicates whether each of the macroblocks in the motion compensation error image is divided into horizontal or vertical blocks, and the second direction information indicates the predetermined direction.

FIG. 1 (PRIOR ART)

FIG. 2

```
        ┌─────────────┐
        │    START    │
        └─────────────┘
               │
┌──────────────────────────────┐
│      PREDICT MC ERROR OF      │
│  CURRENT BLOCK USING PREVIOUS │
│   BLOCK NEIBORING TO CURRENT  │──10
│     BLOCK BY ONE PIXEL WHEN   │
│   DIGITAL MOTION IMAGE IS CODED│
└──────────────────────────────┘
               │
┌──────────────────────────────┐
│  RECOVER MC ERROR IMAGE FROM  │
│   RECOVERED PREDICTED ERROR   │──12
│    IMAGE WHEN DIGITAL MOTION   │
│       IMAGE IS DECODED         │
└──────────────────────────────┘
               │
        ┌─────────────┐
        │     END     │
        └─────────────┘
```

FIG. 3A

FIG. 3B

FIG. 3C

FIG. 4

10A

$$\text{START}$$

REMOVE TEMPORAL REDUNDANCY OF DIGITAL MOTION PICTURE — 30

OBTAIN PREDICTED ERROR IMAGE — 32

PERFORM ORTHOGONAL TRANSFORM ON PREDICTED ERROR IMAGE — 34

QUANTIZE RESULT OF ORTHOGONAL TRANSFORM — 36

PERFORM VLC ON QUANTIZATION RESULTS — 38

TO 12

FIG. 5

12A

START

PERFORM VLD ON RESULT OF VLC — 50

DEQUANTIZE RESULT OF VLD — 52

RECOVER PREDICTED ERROR IMAGE — 54

RECOVER MC ERROR IMAGE — 56

RECOVER DIGITAL MOTION IMAGE — 58

END

FIG. 6

```
        ┌──────────────┐
        │    START     │
        └──────┬───────┘
               │
   ┌───────────▼──────────────┐
   │ DETERMINE WHETHER MC ERROR│
   │ IMAGE IS DIVIDED INTO HORIZONTAL ├─ 70
   │    OR VERTICAL BLOCKS     │
   └───────────┬──────────────┘
               │
   ┌───────────▼──────────────┐
   │    PREDICT MC ERROR OF    │
   │      CURRENT BLOCK        ├─ 72
   └───────────┬──────────────┘
               │
        ┌──────▼───────┐
        │    TO 12     │
        └──────────────┘
```

EP 1 553 781 A2

FIG. 7

FIG. 8

START
↙70A

SUM ABSOLUTE VALUES OF
DIFFERENCES BETWEEN LUMINANCE
ERROR VALUES OF HORIZONTALLY
NEIGHBORING PIXELS TO CALCULATE
FIRST SUM S1 AND SUM ABSOLUTE
VALUES OF DIFFERENCES BETWEEN
LUMINANCE ERROR VALUES OF
VERTICALLY NEIGHBORING PIXELS
TO CALCULATE SECOND SUM S2 ⸺140

142

YES ← $S1 > S2$ ?

NO

144

$S1 < S2$ ? → NO

146

DETERMINE TO DIVIDE
MB INTO HORIZONTAL
BLOCKS

YES 148

DETERMINE TO DIVIDE
MB INTO VERTICAL
BLOCKS

150

DETERMINE TO DIVIDE
MB INTO PRE-
DETERMINED HORIZONTAL
OR VERTICAL BLOCKS

TO 72

FIG. 9

| | | | | |
|---|---|---|---|---|
| $Z_{11}$ | $Z_{12}$ | $\cdots$ | | $Z_{1N}$ |
| $Z_{21}$ | $Z_{22}$ | $\cdots$ | | $Z_{2N}$ |
| $\vdots$ | $\vdots$ | | | $\vdots$ |
| $Z_{M1}$ | $Z_{M2}$ | $\cdots$ | | $Z_{MN}$ |

FIG. 10

72A

```
( START )
```

↓

CLASSIFY PIXELS IN CURRENT BLOCK INTO GROUPS — 170

↓

ANALYZE LOCALLY RECOVERED LUMINANCE ERROR VALUES IN PREDETERMINED DIRECTION TO CALCULATE REFERENCE VALUE OF EACH PIXEL — 172

↓

SUBTRACT REFERENCE VALUE FROM LUMINANCE ERROR VALUE TO OBTAIN PREDICTED MC ERROR — 174

↓

( TO 12 )

FIG. 11A

N

PREVIOUS BLOCK ~190
CURRENT BLOCK ~192

FIG. 11B

190A

192A | a0 | a1 | a2 | a3 | a4 | a5 | a6 | a7 | a8 | a9 | a10 | a11 | a12 | a13 | a14 | a15

210

FIG. 11C

190B

192B | a0 | a1 | a2 | a3 | a4 | a5 | a6 | a7 | b0 | b1 | b2 | b3 | b4 | b5 | b6 | b7

212 214

FIG. 11D

190C

192C | a0 | a1 | a2 | a3 | b0 | b1 | b2 | b3 | c0 | c1 | c2 | c3 | d0 | d1 | d2 | d3

216 218 220 222

FIG. 11E

190D

192D | a0 | a1 | b0 | b1 | c0 | c1 | d0 | d1 | e0 | e1 | f0 | f1 | g0 | g1 | h0 | h1

226 228 230 232 234 236 238 240

FIG. 12A

FIG. 12B

FIG. 12C

FIG. 12D

FIG. 12E

FIG. 12F

FIG. 13

```
         ┌─────────┐
         │  START  │
         └────┬────┘
              │
  ┌───────────────────────────┐
  │ INTERPRET FIRST AND SECOND│──── 280
  │   DIRECTION INFORMATION   │
  └───────────┬───────────────┘
              │
  ┌───────────────────────────┐
  │  RECOVER REFERENCE VALUES │──── 282
  └───────────┬───────────────┘
              │
  ┌───────────────────────────┐
  │  RECOVER MC ERROR IMAGE   │──── 284
  └───────────┬───────────────┘
              │
         ┌─────────┐
         │   END   │
         └─────────┘
```

FIG. 14

```
              300              302
          ┌─────────┐      ┌─────────┐
IN1 ─────▶│  CODER  │─────▶│ DECODER │─────▶ OUT1
          └─────────┘      └─────────┘
```

EP 1 553 781 A2

FIG. 15

FIG. 16

IN4 → VLD UNIT `350` → DE-QUANTIZER `352` → IOT UNIT `354` → FIRST MC ERROR IMAGE RECOVERY UNIT `356` → MOTION PICTURE RECOVERY UNIT `358` → OUT3

302A

360

FIG. 17

```
                    ╱380                      ╱382
         ┌──────────────┐         ┌──────────────┐
IN5 ─────│    BLOCK     │─────────│    ERROR     │─────── OUT4
         │  DETERMINER  │     ┌───│  PREDICTOR   │
         └──────────────┘     │   └──────────────┘
                              │
IN6 ──────────────────────────┘
```

FIG. 18

```
                                                      ╱380A

             ╱400      S1      ╱402            ╱404
      ┌──────────────┐     ┌──────────────┐ ┌──────────────┐
IN7 ──│     SUM      │─────│  COMPARATOR  │─│  NFORMATION  │─── OUT5
      │  CALCULATOR  │─────│              │ │ OUTPUT UNIT  │
      └──────────────┘  S2 └──────────────┘ └──────────────┘
```

FIG. 19

382A

GROUPING UNIT 420

ANALYZER 424

ERROR OPERATOR 412

IN8

IN9

OUT6

410

FIG. 20

DIRECTION INTERPRETER 440

REFERENCE VALUE RECOVERY UNIT 442

IMAGE RECOVERY UNIT 444

IN10

IN11

OUT7